(19) Europäisches Patentamt
European Patent Office
Office européen des brevets

(11) **EP 4 112 158 A1**

(12) **EUROPEAN PATENT APPLICATION**
published in accordance with Art. 153(4) EPC

(43) Date of publication:
04.01.2023 Bulletin 2023/01

(21) Application number: 20921312.3

(22) Date of filing: 29.10.2020

(51) International Patent Classification (IPC):
*B01F 3/08* (2006.01)    *B01F 5/06* (2006.01)
*B01F 5/10* (2006.01)    *B01F 15/02* (2006.01)
*B01J 13/00* (2006.01)

(52) Cooperative Patent Classification (CPC):
B01D 19/00; B01F 23/40; B01F 25/40; B01F 25/50;
B01F 35/00; B01F 35/71; B01J 13/00

(86) International application number:
PCT/JP2020/040630

(87) International publication number:
WO 2021/171701 (02.09.2021 Gazette 2021/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.02.2020 JP 2020031304

(71) Applicant: Nitto Denko Corporation
Ibaraki-shi, Osaka 567-8680 (JP)

(72) Inventors:
• FUKUNAGA Hajime
Ibaraki-shi, Osaka 567-8680 (JP)
• MATSUOKA Satoshi
Ibaraki-shi, Osaka 567-8680 (JP)

(74) Representative: Müller-Boré & Partner
Patentanwälte PartG mbB
Friedenheimer Brücke 21
80639 München (DE)

(54) **METHOD AND APPARATUS FOR PRODUCING EMULSION**

(57)    The present invention provides a method of efficiently manufacturing an emulsion that is improved in monodispersibility by a membrane emulsification method. The manufacturing method for an emulsion of the present invention includes circulating a mixed liquid containing a water phase and an oil phase in a circulation circuit including one or more tanks, a porous body, liquid-delivering means, and circulation pipes configured to connect the tanks, the porous body, and the liquid-delivering means so that the mixed liquid passes through the porous body a plurality of times, wherein the circulation circuit further includes a gas-separating device, and wherein the gas-separating device is configured to remove air bubbles from the mixed liquid therethrough.

FIG. 1

**Description**

Technical Field

The present invention relates to a method and apparatus for manufacturing an emulsion.

Background Art

A mechanical emulsification method has been widely known as a manufacturing method for an emulsion. In general, however, according to the mechanical emulsification method, there is a tendency that the particle diameter distribution of a dispersoid (liquid droplets) in the emulsion to be obtained is wide (the monodispersibility of the dispersoid is low). In contrast, a microchannel emulsification method, a membrane emulsification method, or the like has been known as a manufacturing method for an emulsion in which the particle diameter distribution of its dispersoid (liquid droplets) is narrow (the monodispersibility thereof is high) (Patent Literatures 1 to 4).

According to the microchannel emulsification method, an emulsion excellent in monodispersibility is obtained, but the degree of freedom in designing a ratio between its dispersoid and dispersion medium is low. Meanwhile, according to the membrane emulsification method, a ratio between the dispersoid and dispersion medium of an emulsion to be obtained can be relatively freely designed, but the monodispersibility of the emulsion to be obtained is susceptible to further improvement.

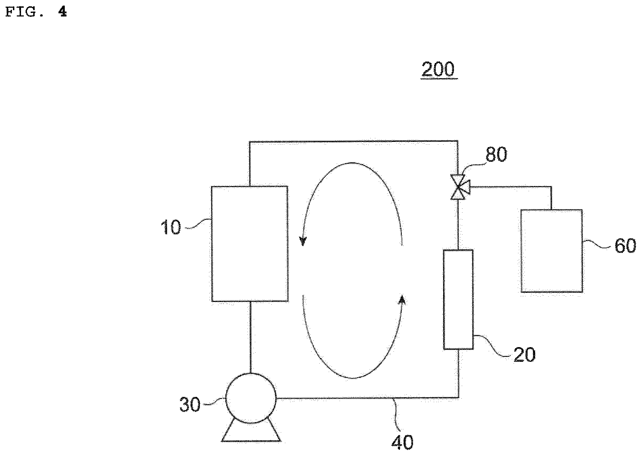

FIG. **4** is a schematic view for illustrating a related-art manufacturing apparatus for an emulsion based on the membrane emulsification method. A manufacturing apparatus **200** illustrated in FIG. **4** includes: a tank **10** for storing a mixed liquid containing a water phase and an oil phase; a porous body **20** for passing the mixed liquid therethrough to emulsify the water phase and the oil phase; liquid-delivering means **30** for delivering the mixed liquid; and circulation pipes **40** for connecting these components to form a circulation circuit.

According to a manufacturing method for an emulsion including using the manufacturing apparatus **200,** a mixed liquid containing the water phase and the oil phase is supplied from the tank **10** having the mixed liquid supplied thereto to the circulation pipes **40** to pass through the porous body **20,** and the mixed liquid that has passed through the porous body **20** is recovered in the tank **10** again. After the supply of the mixed liquid from the tank **10** to the circulation pipes **40,** the passage thereof through the porous body **20,** and the recovery thereof in the tank **10** have been repeated a predetermined number of times, the resultant emulsion is recovered in an emulsion-storing tank **60.** As described above, the emulsion obtained by the manufacturing method is superior in monodispersibility of its liquid droplets to that obtained by the mechanical emulsification method, but may be inferior therein to that obtained by the microchannel emulsification method. In addition, the number of times of circulation required for obtaining desired monodispersibility is large, and hence the manufacturing method is susceptible to improvement in terms of treatment efficiency.

Citation List

Patent Literature

     [PTL 1] JP 6444062 B2
     [PTL 2] JP 6115955 B2
     [PTL 3] JP 2010-190946 A
     [PTL 4] JP 5168529 B2

Summary of Invention

Technical Problem

The present invention has been made to solve the above-mentioned problems of the related art, and a primary object of the present invention is to provide a method of efficiently manufacturing an emulsion that is excellent in monodispersibility by a membrane emulsification method.

Solution to Problem

According to one aspect of the present invention, there is provided a manufacturing method for an emulsion, including circulating a mixed liquid containing a water phase and an oil phase in a circulation circuit including one or more tanks, a porous body, liquid-delivering means, and circulation pipes configured to connect the tanks, the porous body, and the liquid-delivering means so that the mixed liquid passes through the porous body a plurality of times, wherein the circulation circuit further includes a gas-separating device, and wherein the gas-separating device is configured to remove air bubbles from the mixed liquid therethrough.

In one embodiment, the porous body is held in a porous body holder, and when the mixed liquid passes through the porous body, the air bubbles in the mixed liquid are caused to gather in an upper portion of the porous body holder, and the air bubbles that have gathered are discharged through the gas-separating device arranged on the porous body holder.

In one embodiment, the porous body is a tubular porous body, and the mixed liquid is passed from an outer peripheral surface side of the tubular porous body toward an inner peripheral surface side thereof or from the inner peripheral surface side toward the outer peripheral surface side, and the air bubbles in the mixed liquid are caused to gather in an upper portion of the tubular porous body, followed by discharge of the air bubbles that have gathered through the gas-separating device arranged on the porous body holder.

In one embodiment, the mixed liquid is a preliminarily dispersed liquid having preliminarily dispersed therein the water phase and the oil phase.

In one embodiment, the manufacturing method is a manufacturing method for an oil-in-water emulsion having oil droplets dispersed in a water phase thereof.

In one embodiment, the gas-separating device is a gas discharge valve.

In one embodiment, the gas-separating device is free from intaking air even when a pressure in the circulation circuit becomes negative.

In one embodiment, the mixed liquid is free from being stirred in the tanks.

According to another aspect of the present invention, there is provided a manufacturing apparatus for an emulsion, including: one or more tanks each configured to store a mixed liquid containing a water phase and an oil phase; a porous body configured to pass the mixed liquid therethrough to emulsify the water phase and the oil phase; liquid-delivering means for delivering the mixed liquid; and circulation pipes configured to connect the tanks, the porous body, and the liquid-delivering means to form a circulation circuit, wherein the porous body is held in a porous body holder, and wherein the porous body holder has arranged thereon a gas-separating device so that air bubbles derived from the mixed liquid, which gather in an upper portion of the porous body holder when the mixed liquid passes through the porous body, are able to be discharged.

In one embodiment, the porous body is a tubular porous body, and the porous body holder has arranged thereon the gas-separating device so that the air bubbles derived from the mixed liquid, which gather in an upper portion of the tubular porous body when the mixed liquid passes through the tubular porous body from an outer peripheral surface side thereof toward an inner peripheral surface side thereof or from the inner peripheral surface side toward the outer peripheral surface side, are able to be discharged.

In one embodiment, the gas-separating device is a gas discharge valve.

In one embodiment, the gas-separating device is free from intaking air even when a pressure in the circulation circuit becomes negative.

Advantageous Effects of Invention

According to the manufacturing method for an emulsion of the present invention, the air bubbles are removed from the mixed liquid containing the water phase and the oil phase, and the residue is subjected to the treatment with the porous body, and thereby, an emulsion excellent in monodispersibility of its liquid droplets can be efficiently obtained. Heretofore, the removal of air bubbles in an emulsion-manufacturing process has often been performed for the purpose of: preventing the occurrence of particles in a coating film obtained by applying the emulsion to be obtained, resulting from the air bubbles in the emulsion; or improving the efficiency of porous body treatment. In contrast, the present invention exhibits the following effect different from a conventional one through the removal of the air bubbles from the mixed liquid to be treated with the porous body: the monodispersibility of the liquid droplets can be improved at an early stage.

Brief Description of Drawings

FIG. 1 is a schematic view for illustrating a manufacturing apparatus for an emulsion in one embodiment of the present invention.

FIG. 2 is a schematic side view of an example of each of a porous body holder holding a tubular porous body and a gas-separating device arranged on the porous body holder.

FIG. 3 is a schematic longitudinal sectional view of the porous body holder and the gas-separating device illustrated in FIG. 2.

FIG. 4 is a schematic view for illustrating an example of a related-art manufacturing apparatus for an emulsion based on a membrane emulsification method.

FIG. 5 is a graph for showing the evaluation results of the particle diameter distributions of liquid droplets in emulsions obtained in Example and Comparative Example.

FIG. 6 is a graph for showing the evaluation results of the particle diameter distributions of the liquid droplets in the emulsions obtained in Example and Comparative Example.

FIG. 7 is a graph for showing the evaluation results of the particle diameter distributions of the liquid droplets in the emulsions obtained in Example and Comparative Example.

Description of Embodiments

Preferred embodiments of the present invention are described below. However, the present invention is not limited to these embodiments.

One of the features of a manufacturing method for an emulsion according to one embodiment of the present invention is as follows: a manufacturing method for an emulsion, including circulating a mixed liquid containing a water phase and an oil phase in a circulation circuit including one or more tanks, a porous body, liquid-delivering means, and circulation pipes configured to connect the tanks, the porous body, and the liquid-delivering means so that the mixed liquid passes through the porous body a plurality of times, wherein the circulation circuit further includes a gas-separating device, and wherein the gas-separating device is configured to remove air bubbles from the mixed liquid therethrough. The removal of the air bubbles from the mixed liquid to be treated with the porous body can contribute to an efficient manufacture of an emulsion that is more excellent in monodispersibility of its liquid droplets.

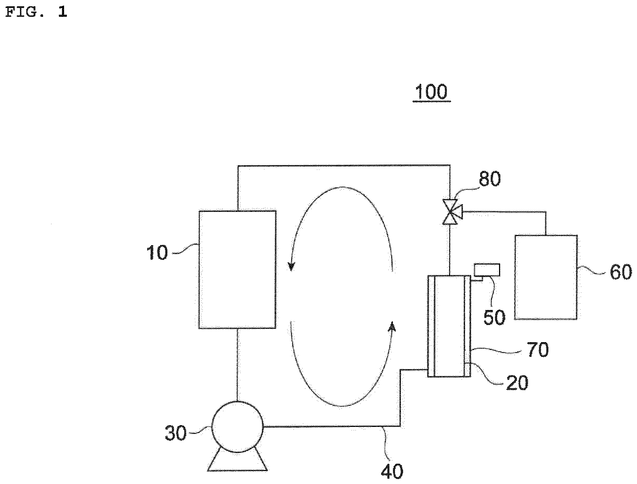

FIG. **1** is a schematic view for illustrating an example of a manufacturing apparatus for an emulsion that may be used in the above-mentioned manufacturing method for an emulsion. A manufacturing apparatus **100** for an emulsion illustrated in FIG. **1** includes: a tank **10** for storing a mixed liquid containing a water phase and an oil phase; a porous body **20** for passing the mixed liquid therethrough to emulsify the water phase and the oil phase; liquid-delivering means **30** for delivering the mixed liquid; circulation pipes **40** for connecting these components to form a circulation circuit; and a gas-separating device 50 for removing air bubbles from the mixed liquid. In the manufacturing apparatus **100,** the circulation circuit is formed under a state in which the porous body **20** is held in a porous body holder 70, and the gas-separating device **50** is mounted to the porous body holder **70.**

According to the manufacturing apparatus **100,** the mixed liquid can be passed through the porous body **20** a plurality of times by driving the liquid-delivering means **30** to circulate the mixed liquid in the circulation circuit. In addition, after the completion of the porous body treatment, the mixed liquid (emulsion) after its passage through the porous body **20** can be recovered in a recovery tank **60** by switching a three-way valve **80** to communicate the circulation circuit to the recovery tank 60.

The tank **10** may include a stirring blade, or may be free of any stirring blade. When the mixed liquid is not stirred in the tank, the mixing of the air bubbles into the mixed liquid is suppressed, and hence the effect of the present invention can be more suitably obtained.

The porous body **20** is an open-cell porous body having communication holes, and can pass the mixed liquid therethrough to emulsify the water phase and the oil phase. The porous body may be appropriately selected in accordance with the target characteristics of the emulsion. For example, when an oil-in-water (O/W) emulsion having oil droplets dispersed in its water phase is manufactured, a hydrophilic porous body is preferably used. In addition, when a water-in-oil (W/O) emulsion having water droplets dispersed in its oil phase is manufactured, a hydrophobic porous body is preferably used.

A material for forming the porous body is not limited as long as the material has desired hydrophilicity or hydrophobicity, and examples thereof include glass, a ceramic, silicon, a metal, and a polymer. In addition, the porous body may have any appropriate shape, such as a membrane-like shape, a plate-like shape, or a tubular shape.

The average hole diameter of the communication holes of the porous body may be appropriately selected in accordance with, for example, the target liquid droplet diameter of the emulsion, and the composition and viscosity of the mixed liquid to be passed through the porous body. In one embodiment, when the target average particle diameter of the liquid droplets of the emulsion is 5 $\mu$m, the average hole diameter of the communication holes may be, for example, from 1 $\mu$m to 20 $\mu$m, preferably from 5 $\mu$m to 10 $\mu$m. In addition, needless to say, from the viewpoint of obtaining an emulsion having high monodispersibility, the hole diameters of the communication holes of the porous body preferably have high uniformity.

The average particle diameter of the liquid droplets of the emulsion means an average diameter (sphere-equivalent diameter when the liquid droplets are not spheres) in a volume distribution, and for example, a value determined by a method (Coulter method) including converting an electric resistance change value at the time of the passage of the liquid droplets dispersed in an electrolytic solution through fine pores into a sphere-equivalent diameter may be used. Alternatively, for example, the following methods may each be adopted: a method including randomly sampling 2,000 particles of interest, observing the particles with a microscope, subjecting a taken image to digital processing, measuring individual particle diameters, and converting the measured values into sphere-equivalent diameters; and a measurement method including using a particle size-measuring apparatus of a light-shielding type for measuring the particle diameters on the basis of a change in quantity of transmitted light caused by the passage of the particles, or of a light-scattering type for specifying a particle size distribution through the measurement of a light scattering intensity changed by the particle diameters. However, an approach by which the particle diameter distribution of a sample having a narrow particle diameter distribution can be measured at the highest resolution out of various approaches is the Coulter method.

The porous body is preferably arranged in the circulation circuit under the state of being held in the porous body holder, and the porous body holder has arranged thereon a gas-separating device so that a gas that has gathered in its upper portion can be discharged. When the mixed liquid containing the air bubbles is passed from one side (supply surface side) of the porous body toward the other side (discharge surface side) thereof, the mixed liquid passes through the porous body more easily than the air bubbles do. Accordingly, while the mixed liquid preferentially passes through the porous body, the air bubbles are left on the supply surface side, and hence can gather in the upper portion of the porous body holder. Accordingly, when the air bubbles that have gathered are discharged through the gas-separating device **50,** the air bubbles can be efficiently removed from the mixed liquid, and as a result, more uniform porous body treatment can be performed.

The porous body may be any appropriate shape as long as the effect of the present invention is obtained. In one embodiment, the porous body is a tubular porous body one end portion, or each of both the end portions, of which is opened. The tubular porous body is arranged so that its axial direction is substantially parallel to a vertical direction, and may be arranged in the porous body holder so that the mixed liquid that has passed from the outer peripheral surface side of the porous body toward the inner peripheral surface side thereof passes through a space in the inner peripheral surface thereof to be supplied from one end portion thereof to the circulation pipes. Alternatively, the porous body may be arranged in the porous body holder so that the mixed liquid that has passed from the inner peripheral surface side toward the outer peripheral surface side passes through a space on the outer peripheral surface side (space between the inner surface of the porous body holder and the outer surface of the tubular porous body) to be supplied from one end portion to the circulation pipes. Thus, when the mixed liquid containing the air bubbles is passed from one side of the tubular porous body toward the other side thereof (from the inner peripheral surface side toward the outer peripheral surface side or from the outer peripheral surface side toward the inner peripheral surface side), the air bubbles can be caused to gather in the upper portion of the tubular porous body, and hence the air bubbles can be discharged through the gas-separating device arranged on the porous body holder. Connection between the tubular porous body or the porous body holder and the circulation pipes may be direct connection, or may be indirect connection through an adaptor or the like. In addition, the number of the porous bodies to be held in the porous body holder may be two or more.

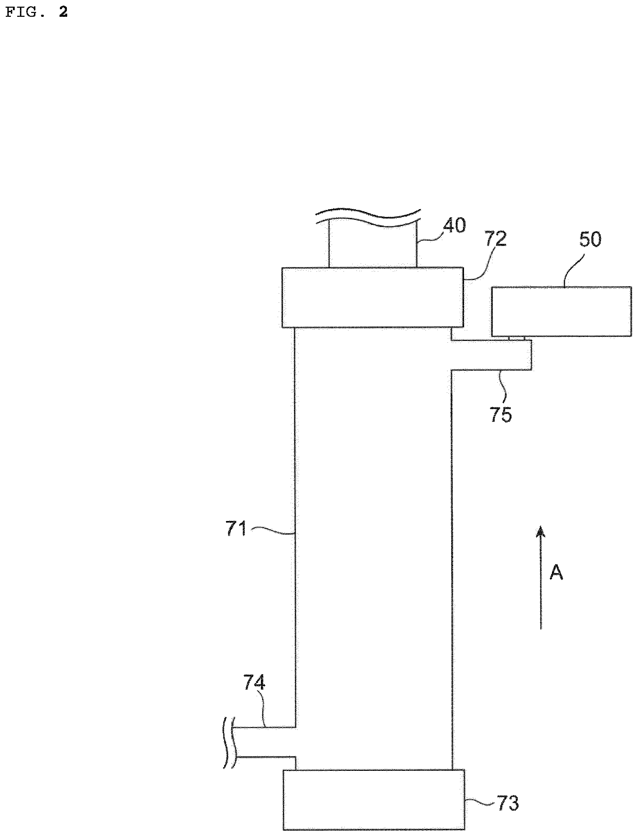

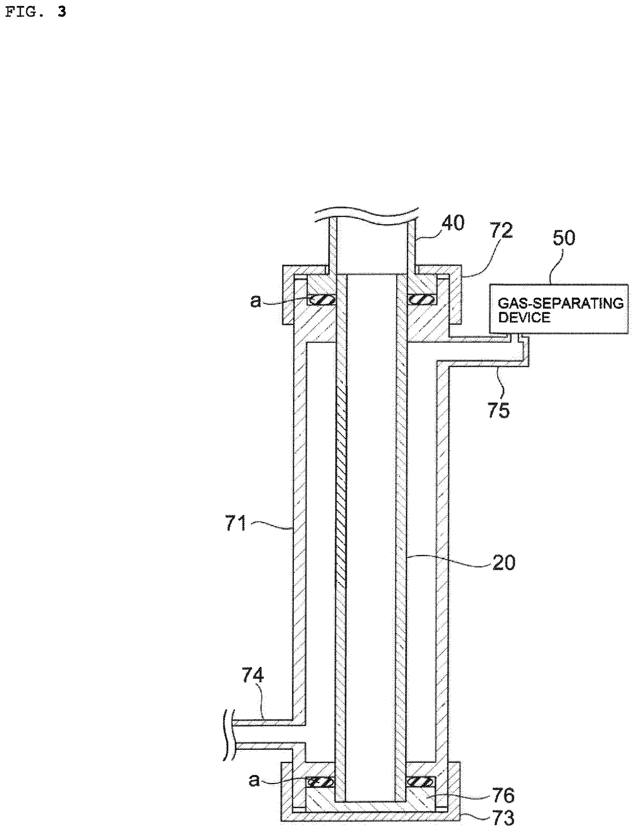

FIG. 2 is a schematic side view of an example of each of the porous body holder storing the tubular porous body and the gas-separating device arranged on the porous body holder, and FIG. 3 is a schematic longitudinal sectional view thereof. In the embodiment illustrated in FIG. 2 and FIG. 3, the porous body holder 70 includes: a tubular main body 71 both the end portions of which are opened, the main body having a space for storing the tubular porous body 20; an upper lid body 72 having an opening for connecting the porous body 20 and the circulation pipe 40, the lid body being for holding the porous body 20; a lower lid body 73 for holding the porous body 20; a supply portion 74 for supplying the mixed liquid from the circulation pipes to the porous body holder (main body 71); a gas reservoir portion 75 for reserving the air bubbles that have gathered; and a sealing body 76 for sealing the lower end portion of the porous body 20. When only one end portion of the tubular porous body is opened, the sealing body 76 may be omitted. In addition, the gas-separating device 50 is mounted to the gas reservoir portion 75.

In the illustrated example, the symbol "a" represents a sealing material, such as a gasket, a packing, or an O-ring, and the arrow A represents a vertically upward direction. In addition, the place where the gas reservoir portion is arranged is not limited to that in the illustrated example, and the portion may be arranged at any appropriate site where the air bubbles that have gathered can be efficiently discharged. Alternatively, the porous body holder 70 (main body 71) may be arranged with a tilt so that the air bubbles efficiently gather in the gas reservoir portion.

According to the configuration of the illustrated example, when the mixed liquid supplied to the porous body holder (main body 71) (in other words, the mixed liquid supplied to the outer peripheral surface side of the tubular porous body) is passed from the outer peripheral surface side of the porous body 20 toward the inner peripheral surface side thereof, the mixed liquid that passes through the porous body more easily than the air bubbles do preferentially passes through the porous body 20, and hence the air bubbles are left on the outer peripheral surface side of the porous body 20. As a result, the air bubbles gather in an upper portion on the outer peripheral surface side of the porous body 20 (e.g., the gas reservoir portion 75). When the air bubbles that have gathered are discharged through the gas-separating device 50, the removal of the air bubbles from the mixed liquid can be efficiently performed, and consequently, more uniform porous body treatment becomes possible.

Although the gas-separating device 50 is mounted to the gas reservoir portion 75 of the porous body holder in the illustrated example, the present invention is not limited to the embodiment. The gas-separating device 50 may be arranged at any appropriate site as long as the effect of the present invention is obtained, and the device may be arranged preferably on the porous body holder 70, more preferably in the upper portion of the porous body holder 70 in the vertical direction, for example, in the upper portion of the side surface of the main body 71 or on the upper lid body 72 from the viewpoint of efficiently discharging the air bubbles. In addition, the gas-separating device 50 may be directly mounted to the main body 71 without arrangement of the gas reservoir portion 75 in the porous body holder 70. In addition, the porous body holder 70 (main body 71) and the porous body may each be arranged with a tilt so that the gas-separating device 50 is positioned in the upper portion of the porous body holder in the vertical direction.

Any appropriate gas-separating device that may be typically used in the removal of air from a liquid pipe may be used as the gas-separating device 50. Of such devices, a device including a backflow preventer (check valve) so as not to intake air even when a pressure in the circulation circuit becomes negative, or a device in which exhaustion (opening and closing of a valve) is automatically performed may be preferably used. A specific example of such gas-separating device may be a gas discharge valve, and a preferred example thereof is a float-type automatic gas discharge valve.

The liquid-delivering means 30 is typically a pump, and a metering pump is preferably used. When the pump causes pulsation, a pulsation-suppressing device for suppressing the pulsation may be mounted as required.

The circulation pipes **40** only need to be capable of connecting the tank **10,** the porous body **20,** and the liquid-delivering means **30** to form the circulation circuit, and may each include any appropriate material.

According to the manufacturing apparatus **100** for an emulsion having the above-mentioned configuration, the manufacturing method for an emulsion according to the embodiment of the present invention can be suitably performed. Specifically, the emulsion may be prepared by circulating the mixed liquid containing the water phase and the oil phase in the circulation circuit, in which the tank **10,** the porous body **20,** and the liquid-delivering means **30** are connected by the circulation pipes as illustrated in FIG. **1,** through the driving of the liquid-delivering means **30** to cause the mixed liquid to pass through the porous body **20** a plurality of times. At this time, when the air bubbles in the mixed liquid are removed through the gas-separating device **50** arranged in the circulation circuit, more uniform porous body treatment can be performed, and as a result, an emulsion improved in monodispersibility of its liquid droplets can be obtained.

The porous body is preferably arranged in the circulation circuit under the state of being held in the porous body holder, and the porous body holder has arranged thereon the gas-separating device. More specifically, the gas-generating device is arranged on the porous body holder (preferably in the upper portion of the porous body holder) so as to be capable of discharging the air bubbles derived from the mixed liquid, which gather in the upper portion of the porous body holder when the mixed liquid passes through the porous body. According to the configuration, while the mixed liquid that passes through the porous body more easily than the air bubbles do preferentially passes through the porous body, the air bubbles that have gathered in the upper portion of the porous body holder without passing through the porous body can be efficiently discharged through the gas-separating device.

In one embodiment, a tubular porous body one end portion, or each of both the end portions, of which is opened is used as the porous body. The tubular porous body may be arranged in the porous body holder so that the mixed liquid that has passed from the outer peripheral surface side of the porous body toward the inner peripheral surface side thereof passes through a space in the inner peripheral surface thereof to be supplied from one end portion thereof to the circulation pipes. Alternatively, the porous body may be arranged in the porous body holder so that the mixed liquid that has passed from the inner peripheral surface side toward the outer peripheral surface side passes through a space on the outer peripheral surface side to be supplied from one end portion to the circulation pipes. According to the configuration, while the mixed liquid easily passes through the porous body, the air bubbles can gather in the upper portion of the porous body (in other words, the upper portion of the porous body holder including the gas-separating device) without passing through the porous body. Accordingly, the porous body treatment of the mixed liquid and the removal of the air bubbles from the mixed liquid can be efficiently performed. Connection between the tubular porous body or the porous body holder and the circulation pipes may be direct connection, or may be indirect connection through an adaptor or the like. In addition, the number of the porous bodies to be held in the porous body holder may be two or more.

The passage of the mixed liquid from one side of the porous body toward the other side thereof may be performed under a state in which a pressure is applied. The supply pressure of the mixed liquid to the porous body may vary depending on, for example, the pore diameter of the porous body and the composition of the mixed liquid. The supply pressure may be, for example, from 5 kPa to 900 kPa, preferably from 20 kPa to 700 kPa, more preferably from 30 kPa to 500 kPa. When the pressure falls within such ranges, the mixed liquid can be satisfactorily caused to pass through the porous body while the air bubbles are suppressed from passing through the porous body. As a result, the air bubbles can be more efficiently removed from the mixed liquid.

The mixed liquid to be used in the above-mentioned manufacturing method contains the water phase and the oil phase, and preferably further contains an emulsifying agent and/or a polymer-based protective colloid agent. Part of the emulsifying agent or the polymer-based protective colloid agent may be added to the emulsion after the emulsification.

The water phase typically contains water. The water phase may be an aqueous solution having dissolved therein any appropriate water-soluble substance in accordance with, for example, purposes.

Any appropriate material that is not compatible with the water phase may be used as the oil phase. Specific examples of the oil phase include: plant oils, such as soybean oil, castor oil, and olive oil; animal oils, such as beef tallow and fish oil; mineral oils, such as an aromatic hydrocarbon, a paraffinbased hydrocarbon, and a naphthene-based hydrocarbon; fatty acids, such as linoleic acid and linolenic acid; organic solvents, such as hexane and toluene; liquid crystal compounds; and synthetic resins. Those materials may be used alone or in combination thereof.

The blending ratios of the water phase and the oil phase in the mixed liquid may be appropriately set in accordance with the target kind (O/W or W/O) of the emulsion.

An anionic surfactant, a cationic surfactant, a nonionic surfactant, an amphoteric surfactant, or the like is preferably used as the emulsifying agent.

Examples of the polymer-based protective colloid agent may include polyvinyl alcohol (PVA), polyvinyl pyrrolidone (PVP), methylcellulose (MC), hydroxyethylcellulose (HEC), hydroxypropylcellulose (HPC), hydroxypropylmethylcellulose (HPMC), starch, polyethylene glycol (PEG), and polyacrylic acid (PAA).

Each of the blending ratios of the emulsifying agent and the polymer-based protective colloid agent in the mixed liquid is, for example, from 0.1 wt% to 5.0 wt%, preferably from 0.2 wt% to 4.0 wt%, more preferably from 0.3 wt% to 3.0 wt% from the viewpoint of improving the monodispersibility of the liquid droplets, productivity, and the like.

The mixed liquid is preferably a preliminarily dispersed liquid having preliminarily dispersed therein in advance the water phase and the oil phase. The use of the preliminarily dispersed liquid can suppress an emulsification failure of the water phase and the oil phase, and can improve the emulsification rate thereof.

The average particle diameter of liquid droplets in the preliminarily dispersed liquid is larger than the average particle diameter that the liquid droplets of the emulsion are desired to have, and falls within the range of preferably from 1 times to 1,000 times, more preferably from 1 times to 100 times as large as the average hole diameter of the porous body. When the average particle diameter of the liquid droplets in the preliminarily dispersed liquid is excessively large as compared to the average hole diameter of the porous body, a pressure required for the emulsification may increase to apply a load exceeding the withstand pressure of a pipe joint portion or the pump.

A mechanical emulsification method including using, for example, a rotary blade-type homogenizer, an ultrasonic homogenizer, or a vortex mixer may be preferably adopted as a manufacturing method for the preliminarily dispersed liquid from the viewpoint of manufacturing efficiency.

The flow rate (flow rate per area of the porous body) of the mixed liquid in the circulation circuit is preferably from 0.01 L/(min·cm$^2$) to 0.5 L/(min·cm$^2$), more preferably from 0.02 L/(min·cm$^2$) to 0.2 L/(min·cm$^2$). When the mixed liquid is flowed at such flow rate, liquid droplets having a desired particle diameter can be suitably formed.

In the manufacturing method of the present invention, the coefficient of variation (CV value) of the particle diameters of the liquid droplets in the emulsion obtained by passing the mixed liquid through the porous body a plurality of times may be, for example, 30% or less, and may be preferably 25% or less, more preferably 22% or less. The coefficient of variation is a value calculated by dividing the standard deviation of the particle diameters of the liquid droplets by the average thereof.

Examples

The present invention is specifically described below by way of Examples, but the present invention is not limited to these Examples. In addition, "%" and "part(s)" refer to "wt%" and "part(s) by weight" unless otherwise specified.

[Example 1]

(Emulsion-manufacturing Apparatus)

Such an emulsion-manufacturing apparatus as illustrated in FIG. 1 to FIG. 3 was used. Specific specifications are as described below.

Pump: metering pump with no pulsation (manufactured by Tacmina Corporation, Smoothflow Pump TPL2ME-056)
Porous body module: porous body module having a shirasu porous glass membrane (pipe form, membrane pore diameter: 10 μm, pipe diameter: Φ10 mm, membrane thickness: 0.7 mm, length: 250 mm) arranged in its casing (porous body holder), and having a configuration illustrated in each of FIG. 2 and FIG. 3
Tank: pressure resistant tank with an air stirrer (100 L vessel)
Pressure gauge: Bourdon tube pressure gauge
Pipe fittings: ISO ferrule union fittings, sanitary pipe (manufactured by Osaka Sanitary Co., Ltd.)
Gas-separating device: automatic gas discharge valve (manufactured by VENN. Co., Ltd., model: "AF-10D", free of any check valve)

(Preparation of Mixed Liquid)

Polyoxyalkylene alkyl ether (manufactured by DKS Co., Ltd., product name: "NOIGEN ET-159") that was a nonionic surfactant was used as an emulsifying agent. The emulsifying agent and pure water were metered, and were then stirred in a vessel with a magnetic stirrer at 1,000 rpm and room temperature for 8 hours so that the emulsifying agent was completely dissolved in the pure water. Thus, a diluted water of the surfactant having a concentration of 10% was prepared.

13.9 Kilograms of a vegetable oil (manufactured by Kao Corporation, product name: "COCONAD MT-N") was metered, and was sufficiently adapted to room temperature. The resultant was used as an oil phase.

1.3 Kilograms of the diluted water of the surfactant was added to the oil phase under a state in which the oil phase was stirred with an air stirring machine (200 rpm), followed by stirring for 1 minute. Next, 9.8 kg of pure water was further added to the resultant, and the mixture was stirred for 5 minutes. Thus, a preliminarily dispersed mixed liquid (preliminarily emulsified O/W emulsion) was prepared.

A blending ratio (water phase (W)/oil phase (O)) between the water phase and the oil phase in the resultant mixed liquid was 40/60, and the content of the emulsifying agent therein was 0.5 wt%. In addition, the average particle diameter of the liquid droplets in the mixed liquid was 400 μm.

(Membrane Emulsification Treatment)

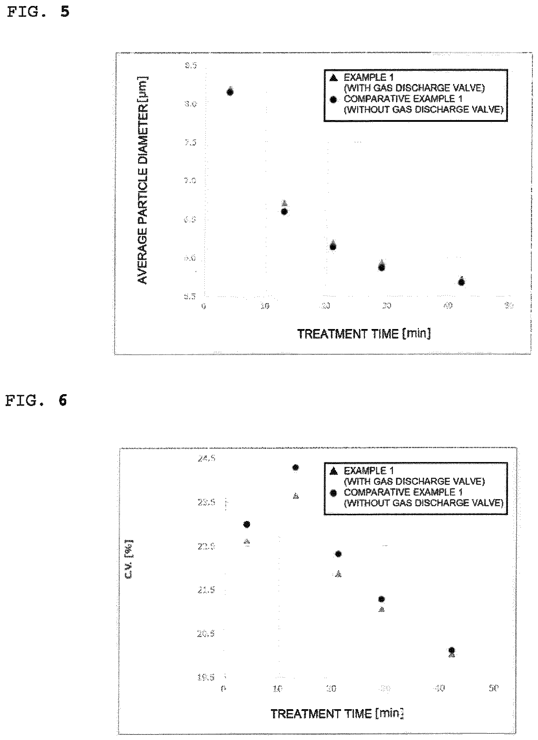

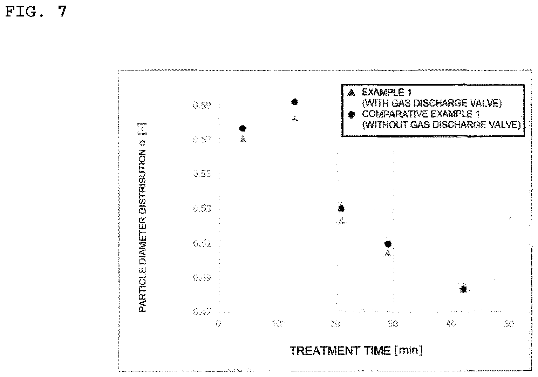

25 Kilograms of the mixed liquid was transferred to the supply tank of the emulsion-manufacturing apparatus. During a test, the air stirring machine of the tank was stopped, and the mixed liquid was not stirred in the tank. The mixed liquid was supplied from the supply tank to the circulation pipes of the apparatus to be flowed in the circulation circuit thereof (pump flow rate: 6.0 kg/min). The mixed liquid that had passed through the porous body was circulated for a certain time period, and then the mixed liquid (emulsion) whose membrane emulsification treatment (porous body treatment) had been completed was recovered in the recovery tank thereof by switching the three-way valve thereof. The pressure at which the mixed liquid was supplied to the porous body was measured with the pressure gauge mounted to the upstream of the membrane module. As a result, the pressure reduced from 250 kPa to 150 kPa within the first 13 minutes of an emulsification treatment, and remained as it was at a constant pressure during the treatment. During the membrane emulsification treatment, 5 mL of the mixed liquid that had been treated for a time period of 4 minutes, 13 minutes, 21 minutes, 29 minutes, or 42 minutes was collected, and was evaluated for its particle diameter distribution. The results are shown in FIGS. 5 to 7.

[Comparative Example 1]

The same experiment as that of Example 1 was performed with the same emulsion-manufacturing apparatus as that of Example 1 except that no gas discharge valve was arranged in the emulsion-manufacturing apparatus. The evaluation results of the particle diameter distribution of the mixed liquid are shown in FIGS. **5 to 7.**

<<Method of evaluating Particle Diameter Distribution>>

The particle diameters of each of the mixed liquids collected in Example and Comparative Example above were measured by a Coulter counter method within 24 hours after the completion of the test, and the average particle diameter, CV value, and particle size distribution relative width σ thereof were determined. Herein, the particle size distribution relative width σ is a value determined from the following equation, and can represent the sharpness of the particle size distribution of the emulsion. Specifically, a smaller value of the σ means that the particle size distribution is narrower.

$$\sigma = (D90 - D10)/D50$$

In the equation, D10 represents the cumulative 10 vol% of the cumulative particle size distribution of the emulsion from small particle diameters, D50 represents the cumulative 50 vol% thereof, and D90 represents the cumulative 90 vol% thereof. The D50 corresponds to the volume-average particle diameter of the emulsion. The volume percent of the cumulative particle size distribution is a value measured with the following measuring apparatus.

The particle size distribution relative width σ of an emulsion varies depending on a manufacturing method for the emulsion. In general, the σ of an emulsion manufactured by using high-speed stirring shearing is from about 0.9 to about 1.5, and the σ of an emulsion manufactured by using a direct membrane emulsification method is from about 0.9 to about 1.2. In contrast, when a permeable membrane emulsification method is used like the present invention, an emulsion having a smaller σ (e.g., a σ of less than 0.9) can be manufactured, and hence an emulsion having a sufficiently sharp particle size distribution as compared to a general manufacturing method for an emulsion can be obtained.

The above-described measurement of the particle diameter by the Coulter counter method was performed as follows: "Multisizer 4e" (manufactured by Beckman Coulter Inc., a 30-micrometer aperture was used as a measuring tube) was used as a measuring apparatus; 150 ml of an electrolytic solution Isoton II was used as a dispersion medium; and the total particles that were dispersed in the dispersion medium in 60 seconds (time threshold value) was measured.

As shown in FIG. **5** to FIG. **7,** the use of the emulsion-manufacturing apparatus including the gas-separating device can provide an emulsion, which is more excellent in monodispersibility of its liquid droplets as compared to the case where a related-art emulsion-manufacturing apparatus is used, within the same treatment time.

Industrial Applicability

The manufacturing method for an emulsion of the present invention is suitably used in the manufacture of an emulsion containing liquid droplets having high monodispersibility.

Reference Signs List

| | |
|---|---|
| **10** | tank |
| **20** | porous body |
| **30** | pump |
| **40** | circulation pipe |
| **50** | gas-separating device |
| **100** | manufacturing apparatus for emulsion |

**Claims**

1.  A manufacturing method for an emulsion, comprising circulating a mixed liquid containing a water phase and an oil phase in a circulation circuit including one or more tanks, a porous body, liquid-delivering means, and circulation pipes configured to connect the tanks, the porous body, and the liquid-delivering means so that the mixed liquid passes through the porous body a plurality of times,

> wherein the circulation circuit further includes a gas-separating device, and
> wherein the gas-separating device is configured to remove air bubbles from the mixed liquid therethrough.

2. The manufacturing method according to claim 1,

> wherein the porous body is held in a porous body holder, and
> wherein when the mixed liquid passes through the porous body, the air bubbles in the mixed liquid are caused to gather in an upper portion of the porous body holder, and the air bubbles that have gathered are discharged through the gas-separating device arranged on the porous body holder.

3. The manufacturing method according to claim 2,

> wherein the porous body is a tubular porous body, and
> wherein the mixed liquid is passed from an outer peripheral surface side of the tubular porous body toward an inner peripheral surface side thereof or from the inner peripheral surface side toward the outer peripheral surface side, and the air bubbles in the mixed liquid are caused to gather in an upper portion of the tubular porous body, followed by discharge of the air bubbles that have gathered through the gas-separating device arranged on the porous body holder.

4. The manufacturing method according to any one of claims 1 to 3, wherein the mixed liquid is a preliminarily dispersed liquid having preliminarily dispersed therein the water phase and the oil phase.

5. The manufacturing method according to any one of claims 1 to 4, wherein the manufacturing method is a manufacturing method for an oil-in-water emulsion having oil droplets dispersed in a water phase thereof.

6. The manufacturing method according to any one of claims 1 to 5, wherein the gas-separating device is a gas discharge valve.

7. The manufacturing method according to any one of claims 1 to 6, wherein the gas-separating device is free from intaking air even when a pressure in the circulation circuit becomes negative.

8. The manufacturing method according to any one of claims 1 to 7, wherein the mixed liquid is free from being stirred in the tanks.

9. A manufacturing apparatus for an emulsion, comprising:

> one or more tanks each configured to store a mixed liquid containing a water phase and an oil phase;
> a porous body configured to pass the mixed liquid therethrough to emulsify the water phase and the oil phase;
> liquid-delivering means for delivering the mixed liquid; and
> circulation pipes configured to connect the tanks, the porous body, and the liquid-delivering means to form a circulation circuit,
> wherein the porous body is held in a porous body holder, and
> wherein the porous body holder has arranged thereon a gas-separating device so that air bubbles derived from the mixed liquid, which gather in an upper portion of the porous body holder when the mixed liquid passes through the porous body, are able to be discharged.

10. The manufacturing apparatus according to claim 9,

> wherein the porous body is a tubular porous body, and
> wherein the porous body holder has arranged thereon the gas-separating device so that the air bubbles derived from the mixed liquid, which gather in an upper portion of the tubular porous body when the mixed liquid passes through the tubular porous body from an outer peripheral surface side thereof toward an inner peripheral surface side thereof or from the inner peripheral surface side toward the outer peripheral surface side, are able to be discharged.

11. The manufacturing apparatus according to claim 9 or 10, wherein the gas-separating device is a gas discharge valve.

12. The manufacturing apparatus according to any one of claims 9 to 11, wherein the gas-separating device is free from intaking air even when a pressure in the circulation circuit becomes negative.

FIG. 1

<u>100</u>

FIG. **2**

FIG. 3

FIG. 4

<u>200</u>

FIG. 5

FIG. 6

FIG. 7

## INTERNATIONAL SEARCH REPORT

International application No.

PCT/JP2020/040630

### A. CLASSIFICATION OF SUBJECT MATTER

B01F 3/08(2006.01)i; B01F 5/06(2006.01)i; B01F 5/10(2006.01)i; B01F 15/02(2006.01)i; B01J 13/00(2006.01)i
FI: B01F3/08 A; B01F15/02; B01F5/06; B01F5/10; B01J13/00 A

According to International Patent Classification (IPC) or to both national classification and IPC

### B. FIELDS SEARCHED

Minimum documentation searched (classification system followed by classification symbols)
A61K9/107-113; B01D19/00; B01F3/08, 5/06-10, 15/02; B01J13/00

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-530072 A (NEWFLUID GMBH) 29 September 2016 (2016-09-29) claims, embodiments, in particular, paragraphs [0096]-[0114], [0119], fig. 1, 12 | 1-2, 4-9, 11-12 |
| Y | claims, embodiments, in particular, paragraphs [0096]-[0114], [0119], fig. 1, 12 | 1-12 |
| Y | JP 2007-125535 A (KIYOMOTO CORPORATION) 24 May 2007 (2007-05-24) examples, fig. 3 | 1-12 |
| A | JP 2005-279326 A (SPG TECHNOLOGY CO., LTD.) 13 October 2005 (2005-10-13) | 1-12 |
| A | JP 6-315617 A (MIYAZAKI-KEN) 15 November 1994 (1994-11-15) | 1-12 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 December 2020 (10.12.2020) | 22 December 2020 (22.12.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/040630

| Patent Documents referred in the Report | Publication Date | Patent Family | Publication Date |
|---|---|---|---|
| JP 2016-530072 A | 29 Sep. 2016 | US 2016/0101993 A1 embodiment, in particular, paragraphs [0112]-[0130], [0135], claims, fig. 1, 12 WO 2014/198867 A2 EP 3007795 A2 DE 102013211032 A1 | |
| JP 2007-125535 A | 24 May 2007 | (Family: none) | |
| JP 2005-279326 A | 13 Oct. 2005 | (Family: none) | |
| JP 6-315617 A | 15 Nov. 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6444062 B
- JP 6115955 B
- JP 2010190946 A
- JP 5168529 B